(19) Europäisches Patentamt / European Patent Office / Office européen des brevets

(11) **EP 3 796 301 B1**

(12) **EUROPEAN PATENT SPECIFICATION**

(45) Date of publication and mention
of the grant of the patent:
**16.07.2025   Bulletin 2025/29**

(21) Application number: **20188251.1**

(22) Date of filing: **28.07.2020**

(51) International Patent Classification (IPC):
**G09G 3/3208** (2016.01)

(52) Cooperative Patent Classification (CPC):
**G09G 3/3208;** G09G 2320/0233; G09G 2320/0285;
G09G 2320/043; G09G 2320/045

(54) **METHOD AND SYSTEM OF STRESS COMPENSATION IN DISPLAY DEVICE**

VERFAHREN UND SYSTEM ZUR SPANNUNGSKOMPENSATION IN EINER
ANZEIGEVORRICHTUNG

PROCÉDÉ ET SYSTÈME DE COMPENSATION DE CONTRAINTE DANS UN DISPOSITIF
D'AFFICHAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.09.2019   US 201962902284 P
18.10.2019   US 201916657766**

(43) Date of publication of application:
**24.03.2021   Bulletin 2021/12**

(73) Proprietor: **Samsung Display Co., Ltd.
Yongin-si
Gyeonggi-do
17113 (KR)**

(72) Inventor: **COOK, Gregory W.
San Jose, California 95139 (US)**

(74) Representative: **Marks & Clerk LLP
15 Fetter Lane
London EC4A 1BW (GB)**

(56) References cited:
**US-A1- 2015 062 202     US-A1- 2019 221 158**

• **EMRAH AKYOL ET AL: "On Constrained
Randomized Quantization", DATA
COMPRESSION CONFERENCE (DCC), 2012,
IEEE, 10 April 2012 (2012-04-10), pages 72 - 81,
XP032172471, ISBN: 978-1-4673-0715-4, DOI:
10.1109/DCC.2012.15**

# Description

## FIELD

Aspects of the present disclosure relate to stress compensation or image sticking or ghosting effect in a display device.

## BACKGROUND

Compensation for output decline in a video display such as an organic light-emitting diode (OLED) display may be used to preserve image quality as a display ages. The data used to perform such compensation may be stored in compressed form to reduce memory requirements; however, errors in such compressed data may accumulate unevenly, resulting in loss of image quality.

Additionally, when an OLED display device displays a static image for a prolonged period of time, it may suffer from image retention. The result is that once the static image is removed or changed, a faint outline - or ghosting - of the original image may still be visible to a user, even when the image content has changed. This is often referred to as image sticking, image retention, or image ghosting.

Thus, there is a need for an improved system and method for stress compensation to reduce or eliminate output decline of OLED display devices.

The above information disclosed in this Background section is only for enhancement of understanding of the background of the disclosure and therefore it may contain information that does not constitute prior art.

US2015062202 describes a method of accumulating data by a processor in a nonvolatile memory to track use of a device. The method includes: retrieving by the processor a next datum for accumulation into a first accumulation stored in the memory, the next datum representing a next use of the device; generating by the processor a next dither offset; adding by the processor the next dither offset to the next datum to produce a first sum; dividing by the processor the first sum by a scale factor to produce a quantized datum; and adding by the processor the quantized datum to the first accumulation. The first accumulation tracks the use of the device.

US2019221158 describes a deterioration compensation apparatus includes a zone determiner, a stress generator, a first memory and a stress compensator. The zone determiner divides a display area into zones based on a distance from a central portion of the display area. The stress generator generates stress values of output image data for blocks including a plurality of pixels in the display area. The first memory accumulates the stress values of the output image data for the blocks and stores the accumulated stress values of the output image data for the blocks. The stress compensator receives the accumulated stress values of the output image data for the blocks and compensates input image data in a unit of pixels. A number of the pixels included in a block of the blocks varies according to the zone in which the pixels included in the block are located.

Further prior art includes EMRAH AKYOL ET AL: "On Constrained Randomized Quantization", DATA COMPRESSION CONFERENCE (DCC), 2012, IEEE, 10, April 2012 (2012-04-10), pages 72-81, DOI: 10.1109/DCC.2012.15, ISBN: 978-1-4673-0715-4.

## SUMMARY

This summary is provided to introduce a selection of features and concepts of embodiments of the present disclosure that are further described below in the detailed description. This summary is not intended to identify key or essential features of the claimed subject matter, nor is it intended to be used in limiting the scope of the claimed subject matter. One or more of the described features may be combined with one or more other described features to provide a workable device.

Aspects of embodiments of the present disclosure relate to a system and a method for reducing or eliminating display output decline by mitigating the effects of pixel degradation/aging in a display device.

Aspects of embodiments of the present disclosure relate to a system and method utilizing dither to compensate for quantization noise in iterative compression on additive data.

According to some embodiments of the present disclosure, there is provided a method according to claim 1.

Optional features of the method are set out in dependent claims 2 to 5.

According to some embodiments of the present disclosure, there is provided a system according to claim 6.

At least some of the above and other features of the invention are set out in the claims.

## BRIEF DESCRIPTION OF THE DRAWINGS

These and other features of some embodiments of the present disclosure will be appreciated and understood with reference to the specification, claims, and appended drawings, wherein:

FIG. 1 illustrates an embodiment of a display device, according to some embodiments of the present disclosure;
FIG. 2 illustrates a block diagram of a system for stress compensation, according to some embodiments of the present disclosure;
FIG. 3A illustrates a block diagram of the encoder, according to some embodiments of the present disclosure;
FIG. 3B illustrates a block diagram of decoder, according to some embodiments of the present disclosure;
FIG. 4 illustrates a process of stress compensation via a decoder in a display device, according to some embodiments of the present disclosure; and
FIG. 5 illustrates a process of stress compensation in a display device, according to some embodiments of the present disclosure.

## DETAILED DESCRIPTION

The detailed description set forth below in connection with the appended drawings is intended as a description of some embodiments of a system and a method for mitigating the effects of compression errors provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure as defined by the following claims. As denoted elsewhere herein, like element numbers are intended to indicate like elements or features.

Certain kinds of display devices may have characteristics that change with use. For example, an organic light-emitting diode (OLED) display device may include a display panel having a plurality of pixels, each including several subpixels (e.g., a red subpixel, a green subpixel, and a blue subpixel), and each of the subpixels may include an organic light-emitting diode configured to emit a different respective color. Each organic light-emitting diode may have an optical efficiency that declines with use, so that, for example, after the organic light-emitting diode has been in operation for some time, the optical output at a certain current may be lower than it was, at the same current, when the organic light-emitting diode was new.

This reduction in optical efficiency may result in dimming of parts of a display panel that have on average, during the life of the display device, displayed brighter portions of the displayed images than other parts of the display. For example, a display device used to view largely unchanging images from a security camera. The field of view of the security camera may contain a scene having a first portion that is sunlit, and relatively bright during most of the day, and a second portion that is in the shade and relatively dim during most of the day. The display device may eventually show a more significant decrease in optical efficiency in the first portion than in the second portion. The fidelity of image reproduction of such a display device may degrade over time as a result. Furthermore, a display device that is used part of the time to display white text at the bottom of the image, separated by a black margin from the rest of the image, may experience a lower reduction of optical efficiency in the black margin than in other parts of the display panel. As a result, if the display device is later used in a mode in which a scene fills the entire display panel, a brighter band may appear where the black margin was previously displayed. This may be referred to as image sticking or ghosting.

To reduce the effect of such non-uniformities in the optical efficiency of a display device, a display device may include features to compensate for the reduction of optical efficiency resulting from use of the display.

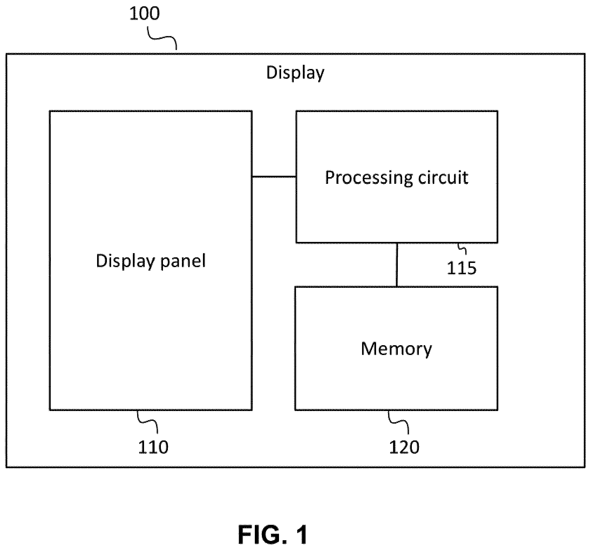

FIG. 1 illustrates an embodiment of a display device 100, according to some embodiments of the present disclosure.

Referring to FIG. 1, the display device 100 may include a display panel 110, a processing circuit 115 (e.g., a processor or a central processing unit (CPU)), and a memory 120. The memory 120 includes data that may be referred to as a "stress profile" or "stress table" for the display device 100. The "stress profile" or "stress table" stored on the memory 120 may be a table of numbers or "stress values" indicating the amount of stress each sub-pixel in the display device 100 has been subjected to during the life of the display device 100. The "stress" may be the total (e.g., time-integrated) drive current that has flowed through each sub-pixel during the life of the display device 100 or sum total of the brightness values displayed. For example, the "stress" may be the total charge that has flowed through each sub-pixel during the life of the display device 100.

In some embodiments, the method of determining the "stress profile" may be a data driven method to compensate for OLED output decline. In some embodiments, in order to determine the "stress profile" of the display device 100, the memory 120 may accumulate one number for one or some sub-pixels, each time a new image is displayed in the display device 100 as a new entry in the "stress profile" or "stress table" for the display device 100. For example, as a continuous stream of images together form displayed video in the display device 100, the drive current for each sub-pixel in each image may be measured and a number indicating the current or brightness of the subpixel may be added to the respective number or "stress" for that sub-pixel in "stress profile" or stress table" in the memory 120. The stress value for each sub-pixel may be calculated as the total sum of the brightness values displayed by the sub-pixel.

In some embodiments, a display device 100 includes a timing controller and a plurality of driver integrated circuits (e.g., a scan/gate driver and a data driver). The processing circuit 115 may be, or may be part of, one or more of the driver integrated circuits. In some embodiments, each driver integrated circuit is responsible for driving a portion of the display panel 110, and it may accordingly perform stress accumulation and stress compensation for that portion, independently of the other driver integrated circuits.

In some embodiments, during operation of the display device 100, the drive current to each sub-pixel may be adjusted to compensate for an estimated loss of optical efficiency. The estimated loss of optical efficiency may be based on the lifetime stress of the sub-pixel. For example, the drive current to each sub-pixel may be increased in accordance with (e.g., in proportion to) the estimated loss of optical efficiency of the sub-pixel (e.g., as accumulated in the memory 120). As a result, the optical output of the sub-pixel may be substantially the same as it would have been had the optical efficiency of the sub-pixel not been reduced, and had the drive current not been increased. In some embodiments, a non-linear function based on empirical data or a model of the physics of the sub-pixel may be used to infer or predict the loss of optical efficiency expected to be present, based on the lifetime stress of the sub-pixel. The calculations of the predicted loss of optical efficiency, and the calculations of the accordingly adjusted drive current, may be performed by the processing circuit 115. In some embodiments, the calculations are stored in a look up table in the memory and the processing circuit 115 may use it for compensation. In some embodiments, during operation of the display device 100, the drive current to each sub-pixel may be adjusted according to a compensation factor, which may be calculated based on an accumulated brightness captured from output image of the sub-pixel.

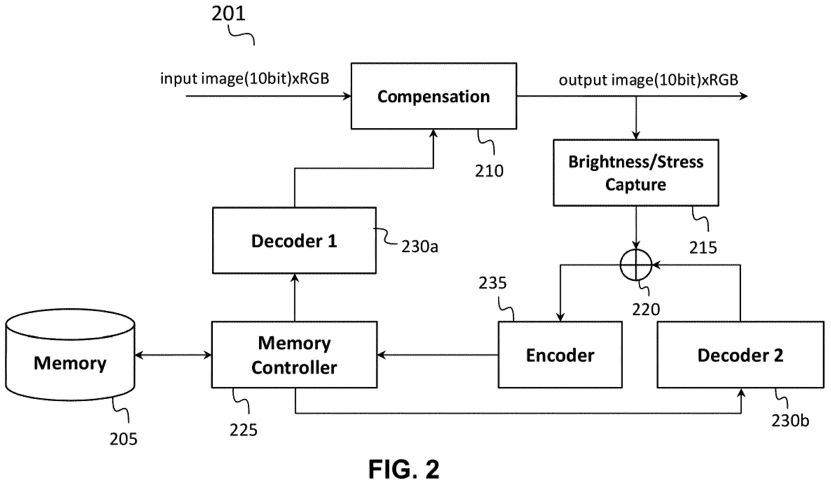

FIG. 2 illustrates a block diagram of a system 200 for stress compensation, according to some embodiments of the present disclosure. The system 200 includes a memory 205 (which may be the same as, or be a part of, the memory 120), a compensation module 210, a stress capture module 215, an adding circuit 220, and a memory controller 225. The stress table is stored in the memory 205. In operation, stress values in the stress table may be accessed (e.g., read out) via the memory controller 225 and may be used by the compensation module 210 to determine compensation factors for the sub-pixels. The compensation module 210 may include a drive current adjustment circuit to calculate adjusted drive current values for each sub-pixel based on the respective compensation factor of that sub-pixel. The compensation factor for each sub-pixel is based on the stress value of that sub-pixel. In some embodiments, the adjusted drive current value for each sub-pixel may be a raw drive current value (e.g., based on the desired optical output of the sub-pixel), adjusted according to the accumulated stress of the sub-pixel. The adjusted drive current value for each sub-pixel is read by the stress capture module 215, which may include a sub-pixel stress sampling circuit. The adjusted drive current value for each sub-pixel represents the current rate of accumulation of stress of the sub-pixels being displayed. Each previously stored (e.g., in the memory 205) stress value for each sub-pixel is increased (or "augmented") in an adding circuit 220 based on the current rate of accumulation of stress (e.g., by a number proportional to the adjusted drive current value), and saved back to the memory 205 via the memory controller 225. The memory controller 225 controls read and write operations in the memory 205 and feeds the stress values from the memory 205 to the drive current adjustment circuit of the compensation module 210 and to the adding circuit 220 as needed. The memory controller 225 also stores the augmented stress values, which have been augmented by the addition of the current rate of accumulation of stress at the adding circuit 220, back into memory 205.

In some embodiments, tracking the total stress of each sub-pixel may require a significant amount of memory. For example, for a display with 1920 x 1080 pixels, with three sub-pixels per pixel, and with the stress of each sub-pixel stored in a few byte numbers, the size of the memory required may be in the order of tens of megabytes. Moreover, the computational burden of updating each stress number for each sub-pixel for each frame of video (e.g., for each displayed image) is significant.

Various approaches may also be used to reduce the memory size required for storing sub-pixel stress in the stress table. In some embodiments, the memory on the stress profile chipset is reduced by compressing the data stored in the memory.

According to some embodiments, the system 200 also includes a first decoder 230a, an encoder 235, and a second decoder 230b. In some embodiments, a compressed representation of the stress table is stored in the memory 205. In operation, compressed stress data may be accessed (e.g., read out) via the memory controller 225 and may be decompressed by the first decoder 230a before being fed to the drive current adjustment circuit of the compensation module 210. The drive current adjustment circuit of the compensation module 210 calculates the adjusted drive current values for each sub-pixel based on the respective compensation factor of that sub-pixel. The compensation factor for each sub-pixel is based on the stress value of that sub-pixel. The adjusted drive current value for each sub-pixel is read by the stress capture module 215. The adjusted drive current value for each sub-pixel represents the current rate of accumulation of stress of the sub-pixels being displayed. The compressed stress data in the memory 205 are also decompressed by a second decoder 230b to retrieve each previously stored (e.g., in the memory 205) stress value for each sub-pixel. The decompressed stress values for the sub-pixel from the second decoder 230b are sent to the adding circuit 220. Each previously stored stress value for each sub-pixel is increased (or "augmented") in the adding circuit 220 based on the current rate of accumulation of stress (e.g., by a number proportional to the adjusted drive current value). The augmented stress values from the adding circuit 220 are compressed by the encoder 235, before being stored in the memory 205. The encoder 235 compresses data that it receives in a manner that reduces the size of the stored data. The compression applied by the compressor may be lossy, in order to reduce (e.g., minimize) the amount of memory capacity consumed by the compressed data. Each of the first decoder 230a and the second decoder 230b decompresses the received data. For example, each of the first decoder 230a and the second decoder 230b performs an operation that inverts, or approximately inverts, the operation performed by the encoder 235. Various methods of compression may be employed, including entropy coding, such as Huffman coding or arithmetic coding.

The output of the first decoder 230a may be truncated so as to discard the lesser significant bits of the decoded value. This may be done due to the fact that while the lesser significant bits serve to accurately measure the accumulated stress, they may not materially affect the compensation performed by the compensation module 210.

According to some embodiments, the encoder 235 and the decoders 230a and 230b operate on a unit of data referred to as a slice. The slice is an independent coding unit of image data that represents a portion of the image. For example, the slice may be a portion that spans the entire width and four vertical lines of the image. Each iteration of the encoding/decoding process described above may be performed on one slice of the image data.

While the first and second decoders 230a and 230b have been illustrated in FIG. 2 as being two separate circuits, embodiments of the present disclosure are not limited thereto. For example, the two decoders 230a and 230b may be combined into one decoder circuit. The second decoder 230b may be omitted and the output of the first decoder 230a may be provided to the adding circuit 220. Hereinafter, the combination of the encoder 235, the adding circuit 220, and the one or more decoders 230a, 230b is referred to as a "codec device".

The system 200 of FIG. 2 may reduce the memory size required for storing sub-pixel stress in the stress table. However, due to the iterative nature of the system, errors can accumulate in the memory or the stress table, as compared to a system that does not use compression. The iterative additive nature of the stress profile may cause the compression and decompression errors to accumulate from one iteration to the next. Thus, unless carefully controlled, the compression error, which may be quantization error, can accumulate and can result in significant compensation factor errors for some parts of the image. Some embodiments of the present disclosure compensate for the accumulation of error by utilizing a particular dither at the decoder 230a/230b.

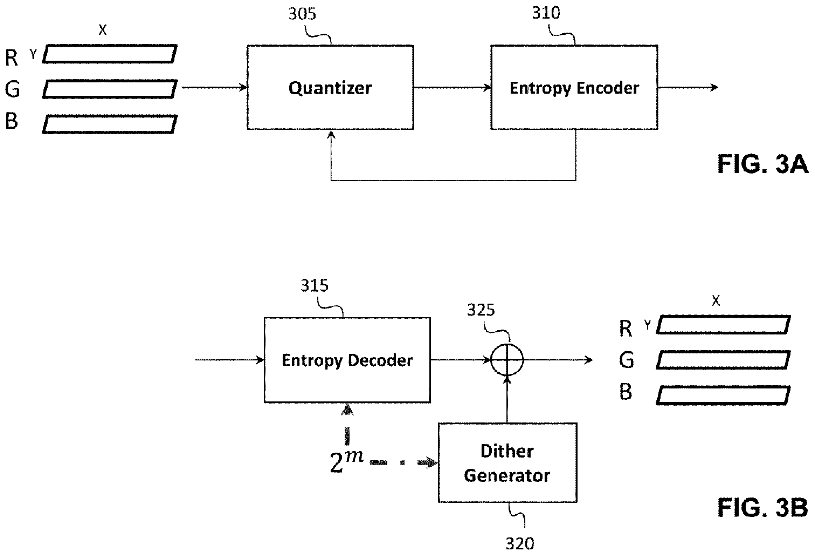

FIG. 3A illustrates a block diagram of the encoder 235, according to some embodiments of the present disclosure. FIG. 3B illustrates a block diagram of decoder 230, according to some embodiments of the present disclosure. The decoder 230 of FIG. 3B may be the same or substantially the same as the first decoder 230a and/or the second decoder 230b of FIG. 2.

Referring to FIG. 3A, according to some embodiments, the encoder 235 includes a quantizer 305 and an entropy encoder 310. The quantizer 305 may be a uniform quantizer with exponential quantization, and may have the effect of zeroing out m (a positive integer) least significant bits of an input value, and thus removing m bits from the bit line. Thus, the operation of the quantizer 305 is inherently lossy. Here, the input value may be accumulated stress data for a slice of one frame of image data/pixel values received from the stress capture module 215. The entropy encoder 310 may include any lossless encoding, such as arithmetic encoding, Huffman encoding, and/or the like. The entropy encoder 310 may also include median adaptive prediction. The quantization operation allows full control over the amount of loss in the system prior to encoding. For example, the value of m allows the encoder 235 to control the amount of error resulting from the encoding operation of the encoder 235. The encoder 235 may determine the exponential quantization parameter m through an iterative process. For example, the value m may initially be set to a first value (e.g., 1) and incremented until a desired compression ratio (e.g., a 4 to 1 compression ratio) is achieved by the encoder 235. According to some embodiments, the resulting value of m is stored (e.g., saved in the header of the encoded data) for later use by the decoder 230.

In some embodiments, the decoder 230 includes an entropy decoder 315, a dither generator 320, and an adder 325. The entropy decoder 315 may be a lossless decoder (e.g., an arithmetic or Huffman decoder) that performs the inverse operation of the entropy encoder 310. In some embodiments, the entropy decoder 315 includes a scaler configured to multiply its input by $2^m$, which is the quantization value utilized by the encoder 235. The adder 325 adds the outputs of the entropy decoder 315 and the dither generator 320.

In effect, the combined operation of the quantizer 305 and the scaler of the entropy decoder 315 may be formulaically expressed by Equation (1): [0058]

$$q'_m(x) = \left\lfloor \frac{x}{2^m} \right\rfloor 2^m \qquad\qquad \text{Equation (1)}$$

where x represents an input value, such as the retrieved stress value, m represents the exponential quantization parameter, $\left\lfloor \frac{x}{2^m} \right\rfloor$ represents the bit operation performed by the quantizer 305 of the encoder 235, the multiplication by $2^m$ is performed by the scaler 315 of the decoder 230, and $q'_m(x)$ represents the quantized value of x.

The quantization and scaling operations have the property that can be expressed by Equation 2:

$$q'_m(q'_m(x)) = q'_m(x) \qquad \qquad \text{Equation (2)}$$

In other words, consecutive iterations of the application of the quantization and scaling does not add further error. That is, the codec device is idempotent (i.e., successive operation of the decoder-encoder operations does not change the results beyond the initial application) or substantially idempotent.

According to some embodiments, the dither generator 320 generates and outputs a dither (e.g., a quantized-constrained dither) that is added to the output of the entropy decoder 315 via the adder 325. The dither may be a uniform dither calculated based on the quantization value $n=2^m$. The dither values may be {0, 1... n-1}. As will be described below, due to the nature of the encoding algorithm, the added dither results in unbiased addition of stress values (i.e., an addition that does not accumulate quantization error).

In some embodiments, the same dither value is added to the decompressed stress values of all of the pixels in the same slice. This ensures that additional entropy is not introduced through the next addition operation of the next iteration of the codec device. This is because the added dither is more useful temporally (per iteration) rather than spatially. If the dither were different spatially for different pixels, it would unnecessarily introduce additional noise, which is more difficult to compress. For example, if different dither values are used within the same slice, brightness values of pixels in a flat area may not be the same after further addition and quantizing. The dither varies slice to slice, even for the same quantization value, as each slice is treated independently and the start of the dither sequence is based on when the quantization changes and is independent from the other slices. In effect, the dither allows the codec to effectively subsample the addition performed by the adding circuit 220 while maintaining unbiased estimation. This can be mathematically illustrated as follows.

It can also be shown that where $q_n(x) = \left\lfloor \frac{x}{n} \right\rfloor n$:

$$E[q_n(X + c)] = c \qquad \qquad \text{Equation (3)}$$

where n is the quantization value $2^m$, c is a non-negative integer representing the stress value of a single subpixel (e.g., a red, green, or blue subpixel of a pixel) for a given iteration calculated by the stress capture module 215, X is a random variable between 0 and (n-1) representing the dither value, and $E[q_n(X + c)]$ is the expected value of the quantized stress value, which may be stored at the memory 205. For example, if the quantization value n is equal to 4, and c is equal to 1, without the dither (i.e., without the random variable X), the expected value described by Equation (3) is 0. However, with dither, the expected value is c = 1. In other words, with the dither added, the expected value of the quantized/compressed stress value being stored in memory is the same as the uncompressed stress value.

Further, it can be shown that:

$$E\left[q_{n_i}\left(X_{n_i} + c_i + q_{n_{i-1}}\left(X_{n_{i-1}} + c_{i-1}\right)\right)\right] = c_i + c_{i-1} \qquad \qquad \text{Equation (4)}$$

where $X_{n_i}$ is a random value between 0 and ($n_i$ - 1), i is natural number representing the current iteration, $n_i$ is a natural number greater than 1, $q_{n_{i-1}}(X_{n_{i-1}} + c_{i-1})$ represents the retrieved compressed value from the memory 205, $c_{i-1}$ is the captured stress value corresponding to the retrieved quantized stress value, $X_{n_{i-1}}$ is the previous dither value corresponding to the retrieved quantized stress value, $c_i$ is the newly added stress value from the stress capture 215, and $X_{n_i}$ is the new dither value.

Equation (4) is an expression of the expected value of the stored stress value for two consecutive iterations. However, even when expanded to an arbitrary number of iterations, the overall conclusion still holds that the expected value of the compressed accumulated stress value, according to some embodiments, is the same as the accumulated value in uncompressed form. This is due to the application of the dither that is set based on the quantization value $2^m$. Thus, the added dither may compensate for the quantization effect of the encoder 235. As a result, the encoder 235 and decoder 230 combination may function as an unbiased estimator for compound addition of stress values.

The encoder 235 may store the quantization value in the header of the encoded data and the decoder 230 may recover the dither value in the header of the decoded data. Thus, it may be unnecessary to keep track of the iteration number. In this manner, the decoder 230 can always identify the previous quantization and dither values, which the decoder 230 may use to determine the dither value in the current iteration.

According to some embodiments, when the decoder 230 determines that no quantization was applied in the previous iteration (e.g., determines that the exponential quantization parameter m=0 or that the quantization value $2^m=1$), the dither value is set to zero and no dither is applied to the encoded data. When the decoder 230 determines the quantization value equals 2 (i.e., m=1), the decoder 230 calculates the current dither value as modulus, or remainder after integer division of, the previous dither value plus one and the quantization value. Otherwise (i.e., m>1), the decoder 230 calculates the dither value as the modulus of the addition of the previous dither value and $2^{m-1} - 1$ and the quantization value. While a slice of data may use a single dither value, it can be proven that by using a modulo additive value of $2^{m-1}-1$, all dither values will be used (over many iterations) for a given quantization value, as long as the quantization step doesn't change between iterations. If not all the values are used, it is possible that the result from the addition and quantization steps may be biased from the actual value over many iterations. In general, the dither sequence needs to only conform to a uniform pseudo random number sequence based on the quantization step size to support unbiased iterative addition. The above description is just one possible approximation, which does not require extra information in the header to hold the state of the psuedo-random number (PRN) generator; and embodiments of the present disclosure are not limited thereto. For example, rather than "bouncing" around all of dither values, as done above, one may progress through the possible dither values in a linear fashion.

The calculation of the dither value based on the quantization value and the previous dither value (i.e., the dither value of the previous iteration), according to some embodiments, may also be expressed in pseudo code as:

$$\text{quant\_value} = 2^m$$

$$\text{if } (m==0) \qquad \text{// no quantization has occurred}$$

$$\text{dither} = 0$$

$$\text{else if } (m==1)$$

$$\text{dither} = (\text{prev\_dither} + 1) \text{ \% quant\_value}$$

$$\text{else}$$

$$\text{dither} = (\text{prev\_dither} + 2^{m-1} - 1) \text{ \% quant\_value}$$

$$\text{prev\_dither} = \text{dither}$$

Thus, according to some embodiments, by using the quantization-constrained dither, the codec can compress/quantize the accumulated stress value data without additive bias. This also allows for the changes in quantization to dynamically match the memory requirements. The method and system, according to some embodiments of the present disclosure, may be readily implemented as it does not require knowledge of the output values of the decoder or the previous values input to the encoder.

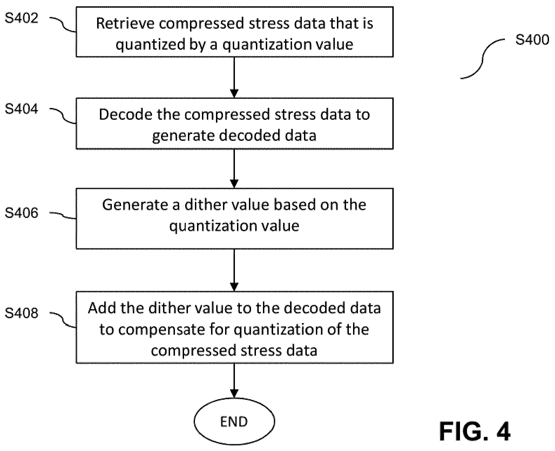

FIG. 4 illustrates a process S400 of stress compensation via a decoder 230 in a display device, according to some embodiments of the present disclosure.

Referring to FIG. 4, according to some embodiments, the decoder 230 retrieves (S402) the compressed stress data that is quantized by a quantization value $2^m$ from the memory 205. The decoder 230 decodes the compressed stress data to generate decoded data (S404), and generates a dither value based on the quantization value (S406). In some embodiments, the generating the dither value is further based on a previous dither value, from a previous iteration, which corresponds to the compressed stress data. The previous dither value and the quantization value may be stored in the header of the compressed stress data. As such, there may be no need to keep track of the number of iterations the accumulated stress data has undergone. The generation of the dither value may be done by an approximation of a uniform random number generator (e.g., a uniform pseudo- random number generator) according to the previous dither value and the quantization value. In some embodiments, the decoder 230 adds the dither value to the decoded data to compensate for quantization of the compressed stress data (S408).

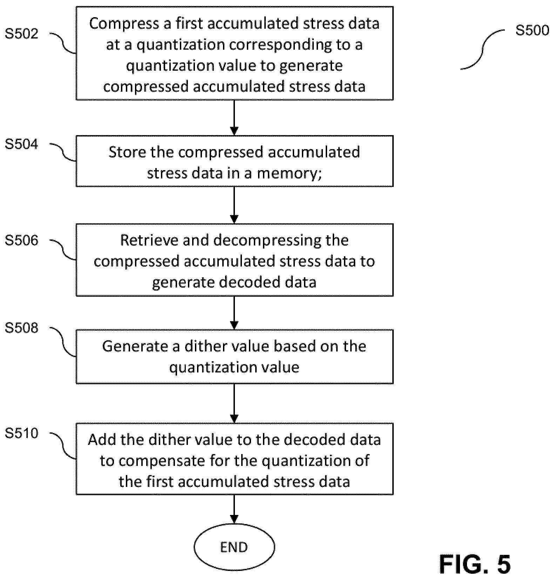

FIG. 5 illustrates a process S500 of stress compensation in a display device, according to some embodiments of the present disclosure.

Referring to FIG. 5, according to some embodiments, the encoder 235 compresses a first accumulated stress data at a quantization corresponding to a quantization value $2^m$ to generate compressed accumulated stress data (S502). The first accumulated stress data may correspond to brightness values of a slice of a frame of pixel data to be displayed on a display device 100. In some embodiments, the encoder 235 stores the compressed accumulated stress data in the memory 205 (S504). The decoder 230 then retrieves and decompresses the compressed accumulated stress data to generate decoded data (S506). In some embodiments, the decoder 230 generates a dither value based on the quantization value $2^m$ (S508) and adds the dither value to the decoded data to compensate for the quantization of the first accumulated stress data (S510). The generating of the dither value may be further based on a previous dither value from a previous iteration, which corresponds to the first accumulated stress data.

The stress capture module 215 may receive an output image to be displayed on the display device 100, and calculate second stress data based on the output image. The adding circuit 220 may receive the second stress data corresponding to a frame of image data to be displayed on the display device 100, and add the decoded data to the second stress data to generate an updated accumulated stress data. The encoder 235 may compress the updated accumulated stress data for storage in the memory 205. The previous dither value may be used in conjunction with a slice of a frame of pixel data that is different from a slice of the frame of pixel data corresponding to the second stress data.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept, which is defined by the following claims.

In addition, it will also be understood that when a layer is referred to as being "between" two layers, it can be the only layer between the two layers, or one or more intervening layers may also be present.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Although embodiments of a system and a method for mitigating the effects of compression errors have been specifically described and illustrated herein, many modifications and variations will be apparent to those skilled in the art.

**EP 3 796 301 B1**

Accordingly, it is to be understood that to a system and a method for mitigating the effects of compression errors using stress profile compression constructed according to principles of this disclosure may be embodied other than as specifically described herein. The scope of the present disclosure is defined by the following claims.

**Claims**

1. A method of compensating for quantization of stress data for an organic light-emitting diode (OLED) display device (100), the method iteratively comprising:

compressing (S502), by an encoder (235), a first accumulated stress data at a quantization corresponding to a quantization value to generate compressed stress data, wherein the quantization value is given by $2^m$, where m is a positive integer defining the number of least significant bits removed in quantization, wherein the first accumulated stress data indicates the amount of stress each sub-pixel in the display device has been subjected to during the life of the display device;
storing (S504), by the encoder (235), the compressed stress data in a memory (205);
retrieving (S506), by a decoder (230b), the stored compressed stress data from the memory (205);
decompressing (S506), by an entropy decoder (315) within the decoder (230b), the retrieved compressed stress data to generate decoded data;
generating (S508), by a dither generator (320) within the decoder (230b), a dither value based on the quantization value;
adding (S510), by an adder (325) within the decoder (230b), the dither value to the decoded data to form compensated decoded data thereby compensating for quantization of the first accumulated stress data,
receiving, by an adding circuit (220), second stress data corresponding to a frame of image data to be displayed on the display device; and
adding, by the adding circuit (220), the compensated decoded data to the second stress data to generate an updated first accumulated stress data,
wherein the generating the dither value comprises:

determining, by the decoder (230b), whether the quantization value is equal to 1; and in response to determining that the quantization value is equal to 1, outputting, by the decoder (230b), the dither value as being equal to zero; or
determining, by the decoder (230b), whether the quantization value is equal to 2; and in response to determining that the quantization value is equal to 2, outputting, by the decoder (230b), the dither value as equaling a modulus of a previous dither value plus one and the quantization value; or
determining, by the decoder (230b), whether the quantization value is greater than 2; and in response to determining that the quantization value is greater than 2, outputting, by the decoder (230b), the dither value as equaling a modulus of a first value and the quantization value, wherein the first value is calculated as an addition of the previous dither value and half of the quantization value subtracted by one;
wherein the previous dither value is the dither value in the previous iteration.

2. The method of claim 1, wherein the quantization value is stored in a header of the compressed accumulated stress data.

3. The method of any preceding claim, wherein the previous dither value is stored in a header of the compressed stress data.

4. The method of any preceding claim, further comprising:
storing, by the decoder (230b), the dither value in a header of the decoded data.

5. The method of any preceding claim, further comprising:

receiving, by a stress capture module (215), an output image to be displayed on the display device (100); and
calculating, by the stress capture module, the second stress data based on the output image.

6. A system for performing stress compensation in an organic light-emitting diode (OLED) display device, the system comprising:

a memory (205); and
a processing circuit configured to perform the method of any preceding claim.

**Patentansprüche**

1. Verfahren zum Ausgleichen einer Quantisierung von Beanspruchungsdaten für eine Anzeigevorrichtung (100) mit organischen Licht emittierenden Dioden (OLED), wobei das Verfahren sich wiederholend Folgendes umfasst:

   Komprimieren (S502), durch einen Codierer (235), erster akkumulierter Beanspruchungsdaten bei einer Quantisierung, die einem Quantisierungswert entspricht, um komprimierte Beanspruchungsdaten zu erzeugen, wobei der Quantisierungswert durch $2^m$ gegeben ist, worin m eine positive ganze Zahl ist, welche die Anzahl von niedrigstwertigen Bits definiert, die bei einer Quantisierung entfernt werden, wobei die ersten akkumulierten Beanspruchungsdaten das Ausmaß einer Beanspruchung angeben, der jeder Teilbildpunkt in der Anzeigevorrichtung während der Lebensdauer der Anzeigevorrichtung ausgesetzt gewesen ist,
   Speichern (S504), durch den Codierer (235), der komprimierten Beanspruchungsdaten in einem Speicher (205),
   Abrufen (S506), durch einen Decodierer (230b), der gespeicherten komprimierten Beanspruchungsdaten aus dem Speicher (205),
   Dekomprimieren (S506), durch einen Entropiedecodierer (315) innerhalb des Decodierers (230b), der abgerufenen komprimierten Beanspruchungsdaten, um decodierte Daten zu erzeugen,
   Erzeugen (S508), durch einen Dither-Generator (320) innerhalb des Decodierers (230b), eines Dither-Wertes auf Grundlage des Quantisierungswertes,
   Addieren (S510), durch einen Addierer (325) innerhalb des Decodierers (230b), des Dither-Wertes zu den decodierten Daten, um ausgeglichene decodierte Daten zu bilden, wodurch eine Quantisierung der ersten akkumulierten Beanspruchungsdaten ausgeglichen wird,
   Empfangen, durch einen Addierschaltkreis (220), zweiter Beanspruchungsdaten, die einem Einzelbild von Bilddaten entsprechen, das auf der Anzeigevorrichtung angezeigt werden soll, und
   Addieren, durch den Addierschaltkreis (220), der ausgeglichenen decodierten Daten zu den zweiten Beanspruchungsdaten, um aktualisierte erste akkumulierte Beanspruchungsdaten zu erzeugen,
   wobei das Erzeugen des Dither-Wertes Folgendes umfasst:

   Feststellen, durch den Decodierer (230b), ob der Quantisierungswert gleich 1 ist; und als Reaktion auf das Feststellen, dass der Quantisierungswert gleich 1 ist, Ausgeben, durch den Decodierer (230b), des Dither-Wertes als gleich null, oder
   Feststellen, durch den Decodierer (230b), ob der Quantisierungswert gleich 2 ist; und als Reaktion auf das Feststellen, dass der Quantisierungswert gleich 2 ist, Ausgeben, durch den Decodierer (230b), des Dither-Wertes als gleich einem Modul eines vorigen Dither-Wertes, zuzüglich eins und des Quantisierungswertes, oder
   Feststellen, durch den Decodierer (230b), ob der Quantisierungswert größer als 2 ist; und als Reaktion auf das Feststellen, dass der Quantisierungswert größer als 2 ist, Ausgeben, durch den Decodierer (230b), des Dither-Wertes als gleich einem Modul eines ersten Wertes und des Quantisierungswertes, wobei der erste Wert als eine Addition des vorigen Dither-Wertes und des halben Quantisierungswertes, abzüglich eins, berechnet wird,
   wobei der vorige Dither-Wert der Dither-Wert in dem vorigen Wiederholungsdurchlauf ist.

2. Verfahren nach Anspruch 1, wobei der Quantisierungswert in einem Header der komprimierten akkumulierten Beanspruchungsdaten gespeichert wird.

3. Verfahren nach einem der vorhergehenden Ansprüche, wobei der vorige Dither-Wert in einem Header der komprimierten Beanspruchungsdaten gespeichert wird.

4. Verfahren nach einem der vorhergehenden Ansprüche, das ferner Folgendes umfasst:
   Speichern, durch den Decodierer (230b), des Dither-Wertes in einem Header der decodierten Daten.

5. Verfahren nach einem der vorhergehenden Ansprüche, das ferner Folgendes umfasst:

   Empfangen, durch ein Beanspruchungserfassungsmodul (215), eines Ausgabebildes, das auf der Anzeigevorrichtung (100) angezeigt werden soll, und

Berechnen, durch das Beanspruchungserfassungsmodul, der zweiten Beanspruchungsdaten auf Grundlage des Ausgabebildes.

6. System zum Durchführen eines Beanspruchungsausgleichs bei einer Anzeigevorrichtung mit organischen Licht emittierenden Dioden (OLED), wobei das System Folgendes umfasst:

einen Speicher (205) und
einen Verarbeitungsschaltkreis, der dafür konfiguriert ist, das Verfahren nach einem der vorhergehenden Ansprüche durchzuführen.

**Revendications**

1. Procédé de compensation d'une quantification de données de contrainte pour un dispositif d'affichage à diodes électroluminescentes organiques (DELO) (100), le procédé comprenant de manière itérative :

la compression (S502), par un codeur (235), de premières données de contrainte accumulées à une quantification correspondant à une valeur de quantification pour générer des données de contrainte compressées, dans lequel la valeur de quantification est donnée par $2^m$, où m est un entier positif définissant le nombre de bits les moins significatifs supprimés lors de la quantification, dans lequel les premières données de contrainte accumulées indiquent la quantité de contrainte à laquelle chaque sous-pixel du dispositif d'affichage a été soumis pendant la durée de vie du dispositif d'affichage ;
le stockage (S504), par le codeur (235), des données de contrainte compressées dans une mémoire (205) ;
la récupération (S506), par un décodeur (230b), des données de contrainte compressées stockées dans la mémoire (205) ;
la décompression (S506), par un décodeur d'entropie (315) dans le décodeur (230b), des données de contrainte compressées récupérées pour générer des données décodées ;
la génération (S508), par un générateur de tramage (320) dans le décodeur (230b), d'une valeur de tramage basée sur la valeur de quantification ;
**l'ajout** (S510), par un additionneur (325) dans le décodeur (230b), de la valeur de tramage aux données décodées pour former des données décodées compensées, compensant ainsi la quantification des premières données de contrainte accumulées ;
la réception, par un circuit d'addition (220), de deuxièmes données de contrainte correspondant à une trame de données d'image à afficher sur le dispositif d'affichage ; et
l'ajout, par le circuit d'addition (220), des données décodées compensées aux deuxièmes données de contrainte pour générer des premières données de contrainte accumulées mises à jour ;
dans lequel la génération de la valeur de tramage comprend :

la détermination, par le décodeur (230b), de si la valeur de quantification est ou n'est pas égale à 1 ; et en réponse à la détermination que la valeur de quantification est égale à 1, **l'émission** en sortie, par le décodeur (230b), de la valeur de tramage comme étant égale à zéro ; ou
la détermination, par le décodeur (230b), de si la valeur de quantification est ou n'est pas égale à 2 ; et en réponse à la détermination que la valeur de quantification est égale à 2, l'émission en sortie, par le décodeur (230b), de la valeur de tramage comme étant égale à un module d'une valeur de tramage précédente plus un et de la valeur de quantification ; ou
la détermination, par le décodeur (230b) de si la valeur de quantification est ou n'est pas supérieure à 2 ; et en réponse à la détermination que la valeur de quantification est supérieure à 2, l'émission en sortie, par le décodeur (230b), de la valeur de tramage comme étant égale à un module d'une première valeur et de la valeur de quantification, dans lequel la première valeur est calculée comme une addition de la valeur de tramage précédente et de la moitié de la valeur de quantification soustraite de un ;
dans lequel la valeur de tramage précédente est la valeur de tramage dans l'itération précédente.

2. Procédé selon la revendication 1, dans lequel la valeur de quantification est stockée dans un en-tête des données de contrainte accumulées compressées.

3. Procédé selon l'une quelconque des revendications précédentes, dans lequel la valeur de tramage précédente est stockée dans un en-tête des données de contrainte compressées.

4. Procédé selon l'une quelconque des revendications précédentes, comprenant en outre :
le stockage, par le décodeur (230b), de la valeur de tramage dans un en-tête des données décodées.

5. Procédé selon l'une quelconque des revendications précédentes, comprenant en outre :

la réception, par un module de capture de contrainte (215), d'une image de sortie à afficher sur le dispositif d'affichage (100) ; et
le calcul, par le module de capture de contrainte, des deuxièmes données de contrainte sur la base de l'image de sortie.

6. Système permettant d'effectuer une compensation de contrainte dans un dispositif d'affichage à diodes électroluminescentes organiques (DELO), le système comprenant :

une mémoire (205) ; et
un circuit de traitement configuré pour exécuter le procédé selon l'une quelconque des revendications précédentes.

FIG. 1

**FIG. 2**

**FIG. 3A**

X — R Y, G, B → Quantizer (305) → Entropy Encoder (310) →

**FIG. 3B**

→ Entropy Decoder (315) → $\oplus$ (325) → X — R Y, G, B

Dither Generator (320)

$2^m$ —

S402 — Retrieve compressed stress data that is quantized by a quantization value

S400

S404 — Decode the compressed stress data to generate decoded data

S406 — Generate a dither value based on the quantization value

S408 — Add the dither value to the decoded data to compensate for quantization of the compressed stress data

END

**FIG. 4**

16

S502 — Compress a first accumulated stress data at a quantization corresponding to a quantization value to generate compressed accumulated stress data

S500

S504 — Store the compressed accumulated stress data in a memory;

S506 — Retrieve and decompressing the compressed accumulated stress data to generate decoded data

S508 — Generate a dither value based on the quantization value

S510 — Add the dither value to the decoded data to compensate for the quantization of the first accumulated stress data

END

**FIG. 5**

**EP 3 796 301 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015062202 A

- US 2019221158 A

**Non-patent literature cited in the description**

- On Constrained Randomized Quantization. **EMRAH AKYOL et al.** DATA COMPRESSION CONFER-ENCE (DCC). IEEE, 10 April 2012, 72-81